# EUROPÄISCHE PATENTSCHRIFT

(11) **EP 1 730 416 B1**
(45) Veröffentlichungstag und Bekanntmachung des Hinweises auf die Patenterteilung: **19.10.2011**
(21) Anmeldenummer: 05734111.7
(22) Anmeldetag: 23.03.2005
(51) Int. Cl.: F16F 1/373

(54) **GUMMILAGER, INSBESONDERE FÜR EIN MOTORPUMPENAGGREGAT EINER SERVOLENKUNG**
RUBBER BEARING, ESPECIALLY FOR A MOTOR PUMP UNIT OF A POWER STEERING SYSTEM
PALIER EN CAOUTCHOUC, NOTAMMENT POUR UN ORGANE MOTOPOMPE DE DIRECTION ASSISTEE

(30) Priorität: 24.03.2004 DE 202004004610 U
(43) Veröffentlichungstag der Anmeldung: 13.12.2006
(73) Patentinhaber: TRW Automotive GmbH, 73553 Alfdorf (DE)
(72) Erfinder: HANSEMANN, Volker, 41470 Neuss (DE); HOFMANN, Frank, 40219 Düsseldorf (DE); SCHOLAND, Michael, 42489 Wülfrath (DE)
(74) Vertreter: Prinz & Partner
(86) Internationale Anmeldenummer: PCT/EP2005/003124
(87) Internationale Veröffentlichungsnummer: WO 2005/093283

(56) Entgegenhaltungen:
- EP-A- 0 899 476
- EP-A- 0 964 178
- DE-U1- 8 905 538
- GB-A- 257 009
- PATENT ABSTRACTS OF JAPAN Bd. 2002, Nr. 09, 4. September 2002 (2002-09-04) -& JP 2002 136043 A (MITSUBISHI ELECTRIC CORP), 10. Mai 2002 (2002-05-10)

## Beschreibung

Die Erfindung betrifft ein Gummilager, insbesondere für ein Motorpumpenaggregat einer Servolenkung.

Bei elektro-hydraulisch angetriebenen Servolenkungen wird eine Pumpe von einem Elektromotor angetrieben. Da die Pumpe mit dem Elektromotor zu einer kompakten Baugruppe zusammengefaßt ist, wird von einem Motorpumpenaggregat gesprochen. Das Motorpumpenaggregat wird im Fahrzeug mit Hilfe eines Halteflanschs befestigt. Dazu wird das Motorpumpenaggregat in der Regel durch ein Gummilagerelement am Halteflansch befestigt, um Geräuschübertragungen zu verhindern.

Die DE 89 05 538 U1 zeigt eine Befestigungsvorrichtung zur Anbringung eines Gebläsemotors an einem Gehäuse, wobei ein Lagerelement aus einem elastomeren Material verwendet wird. Dieses Lagerelement vermindert die Übertragung von Vibrationen des Gebläses auf das Gehäuse.

Die Aufgabe der Erfindung besteht darin, ein Gummilager der eingangs genannten Art dahingehend weiterzubilden, daß sich eine unterschiedliche Lagercharakteristik ergibt, nämlich eine vergleichsweise hohe Steifigkeit entlang der z-Achse des Fahrzeugs, also in vertikaler Richtung, bei gleichzeitig einer hohen Nachgiebigkeit bei Bewegungen in der Ebene, die von der x-Achse und der y-Achse aufgespannt ist. Anders ausgedrückt soll es das Lager ermöglichen, die von der Masse des Motorpumpenaggregats herrührenden Gewichts- und Beschleunigungskräfte in vertikaler Richtung abzustützen, während Bewegungen in horizontaler Richtung zugelassen werden.

Zu diesem Zweck ist erfindungsgemäß ein Gummilager mit den Merkmalen des Anspruchs 1 vorgesehen. Der Bolzen ist also vertikal ausgerichtet, also parallel zur z-Achse, so daß das Gummielement sich unmittelbar auf dem Halteflansch abstützt und auf diese Weise hohe Belastungen übertragen werden können. Bei Belastungen in horizontaler Richtung ermöglicht dagegen das Gummielement, aufgrund der Taillierung des Bolzens, vergleichsweise große Bewegungen.

Vorteilhafte Ausgestaltungen der Erfindung ergeben sich aus den Unteransprüchen.

Die Erfindung wird nachfolgend anhand zweier bevorzugter Ausführungsformen beschrieben, die in den beigefügten Zeichnungen dargestellt sind. In diesen zeigen:
- Figur 1 einen Querschnitt durch ein nicht erfindungsgemäßes Gummilager , und
- Figur 2 einen Querschnitt durch ein Gummilager gemäß einer Ausführungsform der Erfindung.

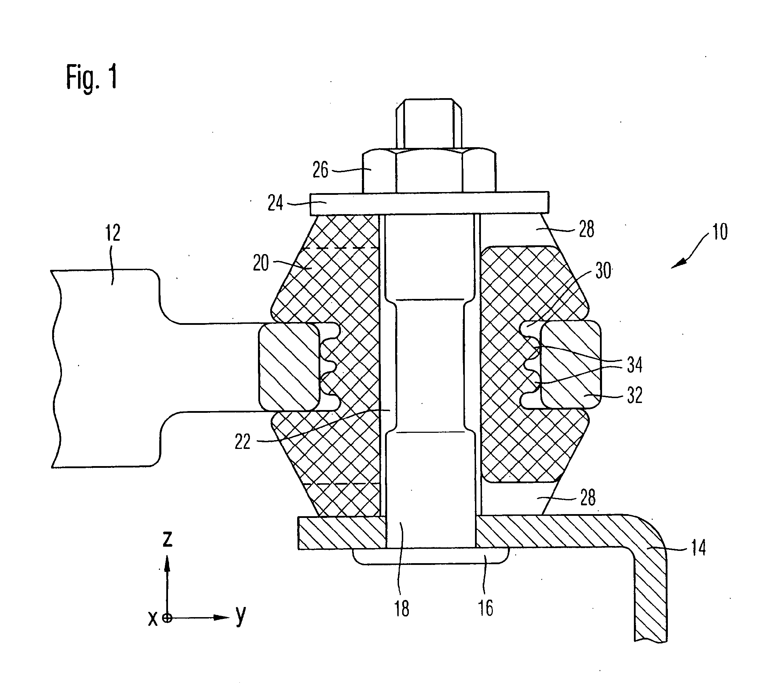

Das in Figur 1 gezeigte Gummilager 10 dient dazu, ein Motorpumpenaggregat 12 an einem Fahrzeug anzubringen. Das Gummilager enthält einen Halteflansch 14, der horizontal endet. Das entgegengesetzte Ende ist fahrzeugfest angebracht. Durch den Halteflansch 14 hindurch erstreckt sich ein Bolzen 16, der bei der hier gezeigten Ausführungsform durch den Halteflansch 14 hindurchgesteckt ist. Es ist alternativ ebenso möglich, den Bolzen anzuschweißen, einzupressen, anzukleben, etc.

Der Bolzen 16 weist einen Schaft 18 auf, dessen Mittelabschnitt tailliert ausgeführt ist. Der Durchmesser im taillierten Abschnitt beträgt etwas 2/3 des Durchmessers des Schaftes an den beiden axialen Enden.

Es ist ein Gummielement 20 vorgesehen, welches einteilig ausgeführt ist und eine durchgehende Mittelöffnung 22 aufweist, durch die hindurch sich der Schaft 18 des Bolzens 16 erstreckt. Das Gummielement 20 ist allgemein tonnenförmig ausgeführt, wobei sich eine der Stirnseiten auf dem Halteflansch 14 abstützt. Die entgegengesetzte Stirnseite liegt an einer Abstützscheibe 24 an, die einstückig mit einer Mutter 26 ausgeführt ist. Die Mutter 26 ist auf das vom Halteflansch 14 abgewandte Ende des Bolzens 16 aufgeschraubt, so daß das Gummielement 20 zwischen der Abstützscheibe 24 und dem Halteflansch 14 eingespannt ist. Das Gummielement 20 weist an seinen beiden axialen Enden mehrere Stege 28 auf, die sowohl in axialer als auch in radialer Richtung ausgerichtet sind. Hieraus folgt, daß sich das Gummielement 20 am Halteflansch 14, an der Abstützscheibe 24 sowie am Schaft 18 des Bolzens 16 nicht mit einer durchgehenden Fläche abstützt, sondern nur mit der Außenfläche des jeweiligen Stegs.

Das Gummielement 20 ist entlang seinem Äquator mit einer umlaufenden Nut 30 versehen, in der ein Befestigungsauge 32 angeordnet ist, das fest mit dem Motorpumpenaggregat 12 verbunden ist. Auf dem Boden der Nut 30 sind zwei Rippen 34 ausgebildet, so daß das Befestigungsauge 32, in radialer Richtung betrachtet, am Gummielement 20 in zwei ringförmigen Flächen anliegt.

Gewichts- und Beschleunigungskräfte, die vom Motorpumpenaggregat 12 auf den Halteflansch 14 ausgeübt werden und entlang der z-Richtung wirken, werden von einem vergleichsweise großen Querschnitt des Gummielements 20 aufgenommen und abgestützt. Die Stege 28 sorgen jedoch für eine ausreichende Nachgiebigkeit. Bewegungen in horizontaler Richtung, also in einer von der x-Achse und der y-Achse aufgespannten Ebene, werden mit großer Nachgiebigkeit abgefedert, da das Gummielement aufgrund der Taillierung des Schaftes 18 des Bolzens 16 in horizontaler Richtung sehr gut nachgeben kann. Zusätzlich sorgen die Rippen 34 für eine hohe Nachgiebigkeit.

Im Falle eines Versagens des Gummielementes 20 verhindert die Abstützscheibe 24, deren Außendurchmesser größer ist als der Innendurchmesser der Öffnung im Befestigungsauge 32, daß sich das Befestigungsauge vom Halteflansch 14 löst.

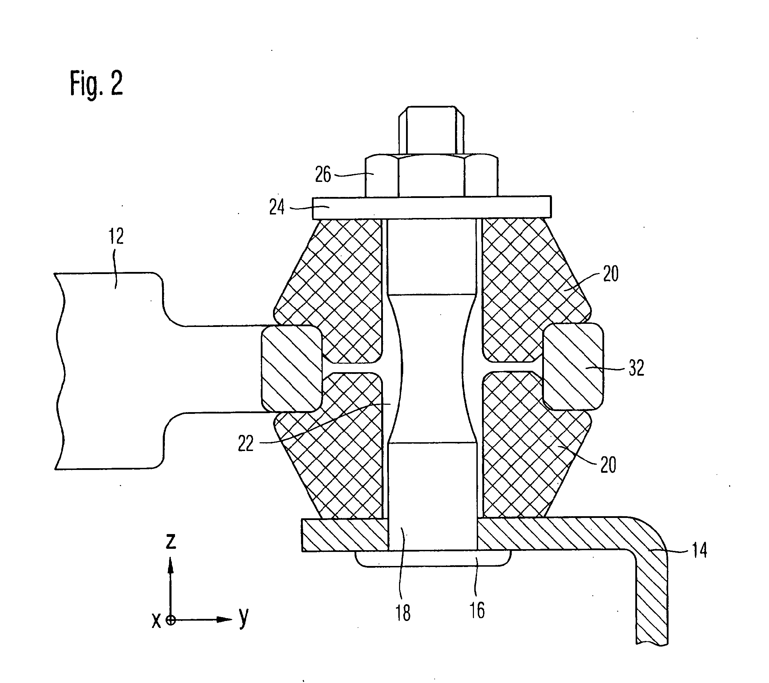

Das in Figur 2 gezeigte Gummilager entspricht hinsichtlich seiner Funktion und seinem Aufbau grundsätzlich dem in Figur 1 gezeigten Lager. Der Unterschied besteht darin, daß bei der in Figur 2 gezeigten Ausführungsform ein zweiteiliges Gummielement 20 verwendet wird. Dies erleichtert die Montierbarkeit des Gummilagers am Befestigungsauge 32.

Ein weiterer Unterschied zwischen der ersten und der zweiten Ausführungsform besteht darin, daß das Gummielement 20 bei der zweiten Ausführungsform ohne die Stege 28 ausgeführt ist. Dies ergibt eine höhere Steifigkeit.

## Patentansprüche

1. Gummilager (10), insbesondere für ein Motorpumpenaggregat (12) einer Servolenkung, mit einem Halteflansch (14), einem Bolzen (16), der sich ausgehend von dem Halteflansch erstreckt, einem zweiteiligen Gummielement (20), das auf dem Bolzen angeordnet ist und eine sich entlang seinem Äquator verlauferide Nut aufweist, und einem Befestigungsauge (32), das auf dem Gummielement angeordnet ist und in die Nut eingreift, wobei der Bolzen (16) tailliert ist, so dass sich eine besonders hohe Nachgiebigkeit des Gummilagers bei Bewegungen in einer Ebene senkrecht zur Längsachse des Bolzens ergibt, und wobei die Nut zwischen den beiden Teilen des Gummielements (20) gebildet ist.

2. Gummilager nach Anspruch 1, **dadurch gekennzeichnet, daß** an dem vom Halteflansch (14) abgewandten Ende des Bolzens eine Abstützscheibe (24) angebracht ist.

3. Gummilager nach Anspruch 2, **dadurch gekennzeichnet, daß** der Bolzen (16) durch den Halteflansch (14) durchgesteckt ist und die Abstützscheibe (24) Teil einer Mutter (26) ist, die auf den Bolzen aufgeschraubt ist.

4. Gummilager nach Anspruch 2 oder Anspruch 3, **dadurch gekennzeichnet, daß** der Außendurchmesser der Abstützscheibe (24) größer ist als der Innendurchmesser des Befestigungsauges (32).

5. Gummilager nach einem der vorhergehenden Ansprüche, **dadurch gekennzeichnet, daß** das Gummielement (20) an seinen axialen Enden mit Stegen (28) versehen ist.

6. Gummilager nach Anspruch 5, **dadurch gekennzeichnet, daß** die Stege (28) radial ausgerichtet sind, so daß sie am Bolzen (16) anliegen.

7. Gummilager nach Anspruch 5 oder Anspruch 6, **dadurch gekennzeichnet, daß** die Stege (28) axial ausgerichtet sind, so daß sie am Halteflansch (14) bzw. an der Abstützscheibe (24) anliegen.

8. Gummilager nach einem der vorhergehenden Ansprüche, **dadurch gekennzeichnet, daß** das Gummielement (20) in dem Bereich, in dem das Befestigungsauge angeordnet ist, mit radial ausgerichteten Rippen (34) versehen ist.

9. Gummilager nach einem der vorhergehenden Ansprüche, **dadurch gekennzeichnet, daß** die Länge des taillierten Abschnitts des Bolzens (16) größer ist als die Dicke des Befestigungsauges (32).

## Claims

1. A rubber bearing (10), in particular for a motor pump unit (12) of a power steering system, comprising a holding flange (14), a bolt (16) which extends proceeding from the holding flange, a two-part rubber element (20) that is disposed on the bolt and has a groove extending along its equator, and a fastening eye (32) that is disposed on the rubber element and engages into the groove, the bolt (16) being waisted so that a particularly high flexibility of the rubber bearing is obtained in the case of movements in a plane perpendicular to the longitudinal axis of the bolt, and the groove being formed between the two parts of the rubber element (20).

2. The rubber bearing according to claim 1, **characterized in that** a supporting disk (24) is mounted at the end of the bolt facing away from the holding flange (14).

3. The rubber bearing according to claim 2, **characterized in that** the bolt (16) is inserted through the holding flange (14) and the supporting disk (24) is part of a nut (26) which is screwed on the bolt.

4. The rubber bearing according to claim 2 or claim 3, **characterized in that** the outside diameter of the supporting disk (24) is larger than the inside diameter of the fastening eye (32).

5. The rubber bearing according to any of the preceding claims, **characterized in that** the rubber element (20) is provided with ridges (28) at its axial ends.

6. The rubber bearing according to claim 5, **characterized in that** the ridges (28) are radially oriented so that they rest against the bolt (16).

7. The rubber bearing according to claim 5 or claim 6, **characterized in that** the ridges (28) are axially oriented so that they rest against the holding flange (14) and the supporting disk (24), respectively.

8. The rubber bearing according to any of the preceding claims, **characterized in that** the rubber element (20) is provided with radially oriented ribs (34) in the region in which the fastening eye is arranged.

9. The rubber bearing according to any of the preceding claims, **characterized in that** the length of the waisted section of the bolt (16) is greater than the thickness of the fastening eye (32).

## Revendications

1. Palier en caoutchouc (10), en particulier pour un groupe motopompe (12) d'une direction assistée, comportant une bride de retenue (14), un boulon (16) s'étendant à partir de la bride de retenue, un élément en caoutchouc (20) en deux pièces agencé sur le boulon et présentant une gorge s'étendant le long de son équateur, et un oeillet de fixation (32) agencé sur l'élément en caoutchouc et s'engageant dans la gorge, le boulon (16) étant cintré de telle sorte qu'une élasticité particulièrement élevée du palier en caoutchouc est obtenue lors des mouvements dans un plan perpendiculaire à l'axe longitudinal du boulon, et la gorge étant réalisée entre les deux pièces de l'élément en caoutchouc (20).

2. Palier en caoutchouc selon la revendication 1, **caractérisé en ce qu'**un disque de support (24) est monté à l'extrémité du boulon qui est détournée de la bride de retenue (14).

3. Palier en caoutchouc selon la revendication 2, **caractérisé en ce que** le boulon (16) est enfoncé à travers la bride de retenue (14), et **en ce que** le disque de support (24) fait partie d'un écrou (26) vissé sur le boulon.

4. Palier en caoutchouc selon la revendication 2 ou la revendication 3, **caractérisé en ce que** le diamètre extérieur du disque de support (24) est supérieur au diamètre intérieur de l'oeillet de fixation (32).

5. Palier en caoutchouc selon l'une des revendications précédentes, **caractérisé en ce que** l'élément en caoutchouc (20) est pourvu de barrettes (28) à ses extrémités axiales.

6. Palier en caoutchouc selon la revendication 5, **caractérisé en ce que** les barrettes (28) sont orientées de manière radiale de sorte à être en appui sur le boulon (16).

7. Palier en caoutchouc selon la revendication 5 ou la revendication 6, **caractérisé en ce que** les barrettes (28) sont orientées de manière axiale de sorte à être en appui sur la bride de retenue (14) ou sur le disque de support (24), respectivement.

8. Palier en caoutchouc selon l'une des revendications précédentes, **caractérisé en ce que** dans la zone, dans laquelle est agencé l'oeillet de fixation, l'élément en caoutchouc (20) est pourvu de nervures (34) à orientation radiale.

9. Palier en caoutchouc selon l'une des revendications précédentes, **caractérisé en ce que** la longueur du tronçon cintré du boulon (16) est supérieure à l'épaisseur de l'oeillet de fixation (32).
